# EUROPÄISCHE PATENTSCHRIFT

(11) **EP 0 969 911 B1**
(45) Veröffentlichungstag und Bekanntmachung des Hinweises auf die Patenterteilung: **30.06.2004**
(21) Anmeldenummer: 98922616.2
(22) Anmeldetag: 12.03.1998
(51) Int. Cl.: B01D 46/52, B01D 27/08, F02M 35/02, B01D 46/24

(54) **LUFTFILTER**
AIR FILTER
FILTRE A AIR

(30) Priorität: 26.03.1997 DE 19712679
(43) Veröffentlichungstag der Anmeldung: 12.01.2000
(73) Patentinhaber: Mann + Hummel GmbH, 71638 Ludwigsburg (DE)
(72) Erfinder: CARLE, Thomas, D-71032 Böblingen (DE); GREIF, Volker, D-71069 Sindelfingen (DE); KOCHERT, Stefan, D-71384 Weinstadt (DE); SPAETH, Bernd, D-89073 Ulm (DE); MÖSSINGER, Klaus, D-74182 Obersulm (DE)
(74) Vertreter: Voth, Gerhard, Dipl.-Ing.
(86) Internationale Anmeldenummer: PCT/EP1998/001411
(87) Internationale Veröffentlichungsnummer: WO 1998/042429

(56) Entgegenhaltungen:
- EP-A- 0 667 177
- WO-A-94/13389
- WO-A-96/21501
- DE-A- 4 416 577
- US-A- 4 720 292
- US-A- 5 114 508
- US-A- 5 547 480

## Beschreibung

Die Erfindung betrifft ein Luftfilter insbesondere für die Ansaugluft für Brennkraftmaschinen.

Aus der US A 47 20 292 ist ein Luftfilter mit folgenden Merkmalen bekannt:

Ein Gehäuse ist mit einer axialen Auslaßöffnung und einem im wesentlichen offenen zweiten Ende versehen, das durch eine entfernbare Abdeckung verschließbar ist. Am Umfang des Gehäuses ist eine Lufteinlaßöffnung angeordnet. Im Gehäuse befindet sich ein im wesentlichen zylindrisches Filterelement mit einem inneren Stützrohr, einem Filter mit einem äußeren Stützrohr, wobei das innere Filterelement in dem Gehäuse koaxial angeordnet ist. Die Abdichtung des Filterelements an dem Gehäuse erfolgt über eine ringförmige Endscheibe, die eine im wesentlichen zylindrische, radial einwärts gerichtete Oberfläche aufweist und über einen inneren Abschnitt des Auslaßteils geschoben wird.

Bekannterweise werden die Filtereinsätze von Luftfiltern nach einer bestimmten Betriebszeit ausgetauscht. Je nach Staubanfall kann die Standzeit eines Luftfilters wenige Tage -zum Beispiel Baumaschinen- bis zu mehreren Monaten betragen. Der aus der oben genannten US-PS bekannte Filtereinsatz, sowie auch andere, üblicherweise verwendete Filtereinsätze bestehen aus einer Kombination von Werkstoffen, wobei insbesondere für die Stützrohre Stahlblech verwendet wird. Das Filtermedium ist Papier oder ein Kunststoffvlies, die Endscheiben bestehen aus Kunststoff (Weichelastomer). Eine Entsorgung solcher Luftfilter bzw. eine Auftrennung in die einzelnen Materialbestandteile ist mit hohem Aufwand verbunden und war deshalb bislang unwirtschaftlich.

Grundsätzlich erhält die Abfallvermeidung Vorrang vor der Abfallverwertung und Abfallbeseitigung. Voraussetzungen für den Verwertungsvorgang sind, daß die Verwertung technisch möglich ist, die Kosten der Verwertung zumutbar sind und für die gewonnenen Stoffe oder Energie ein Markt besteht oder geschaffen werden kann. Erst wenn diese Kriterien nicht erfüllt sind, sind die Abfälle ordnungsgemäß zu beseitigen.

Bei Luftfiltereinsätzen war bislang die Verwertung aufgrund der oben geschilderten Nachteile nicht möglich.

Ein weiterer Nachteil des bekannten Standes der Technik ist darin zu sehen, daß für den Luftfiltereinsatz ein relativ großes Gehäuse benötigt wird, welches im Reinluftbereich unnötig viel Raum beansprucht.

Der Erfindung liegt deshalb die Aufgabe zugrunde, ein Filter in metallfreier Ausführung zu schaffen, welches problemlos zu entsorgen ist und möglichst kompakt aufgebaut ist. Diese Aufgabe wird durch ein Luftfilter gemäß Anspruch 1 gelöst.

Die WO-A-94/13389 offenbart ein Luftfilter, das dem Oberbegriff des Anspruchs 1 entspricht. Die Endscheiben des Filtereinsatzes bestehen aus Polyurethan-Schaum.

Der Kerngedanke der Erfindung liegt in der Anwendung eines Materials, das für Endscheiben eines Luftfilters bzw. grundsätzlich für die Kombination eines Filtermediums mit Stützstrukturen ausgezeichnet geeignet ist. Ein solches Material ist thermoplastisches Polyurethan, ein thermoplastisches Elastomer.

Thermoplastische Elastomere sind Werkstoffe, bei denen elastomere Phasen als Weichkomponente in Kunststoffe als Hartkomponente eingebunden sind. Thermoplastische Elastomere bzw. abgekürzt TPE sind im Gegensatz zu Elastomeren nicht chemisch irreversibel sonder physikalisch reversibel vernetzt. Die reversible Vernetzung wird durch ihren zweiphasigen Aufbau erzeugt. Bei geeigneter Molekulararchitektur bilden die Domänen der harten Sequenzen die physikalischen Vemetzungspunkte in einer kontinuierlichen

Matrix der weichen Sequenzen, die dabei so ausgewählt werden, daß sie sich bei der Gebrauchstemperatur oberhalb ihrer Glastemperatur befinden (Einfriertemperatur). Die Glasübergangstemperatur (falls amorph) bzw. die Schmelztemperatur ( falls teilkristallin) der harten Sequenzen muß dagegen oberhalb der Gebrauchstemperaturen liegen damit die Domänen der harten Sequenzen als Vernetzungspunkte wirken können. TPE verhalten sich daher bei der Gebrauchstemperatur wie Elastomere, oberhalb der charakteristischen Umwandlungstemperatur werden jedoch die harten Sequenzen mobil und die thermoplastischen Elastomere können dann wie Thermoplaste verarbeitet werden.

Der große Vorteil von TPE gegenüber vulkanisierten Elastomeren, liegt in der wesentlich einfacheren Verarbeitung, es entfallen Mastikation (oxidativer Abbau), das Einmischen von Vulkanisationsbeschleunigern, in einigen Fällen auch das compoundieren und natürlich auch die Vulkanisation.

Die thermoplastischen Polyurethane sind wie alle Kunststoffe dieser Familie, Polyaddukte aus Polyisocyanaten und Polyolen. Das gummiähnliche Verhalten resultiert aus dem segmentartigen Aufbau der Makromoleküle. Auch hier wird ein Hartsegment mit einem Weichsegment kombiniert. Die thermoplastischen Polyurethane zeichnen sich aus durch hohe Flexibilität auch bei tiefen Temperaturen, hohe Dauergebrauchstemperatur, hohe Weiter reißfestigkeit, hohes Dämpfungsvermögen, hohe Beständigkeit gegen Fette, Öle, Lösemittel sowie energiereiche Strahlung und UV-Licht.

Die polar aufgebauten thermoplastischen PUR-Elastomere können mit anderen Thermoplaste gemischt und zusammen verarbeitet werden.

Eine Weiterbildung der Erfindung sieht vor, das Filtermedium zusätzlich mit Stützkörper zu versehen, diese können das Filtermedium umschließen und bewirken damit eine Stabilitätserhöhung.

Die Erfindung sieht vor, wenigstens eine Endscheibe mit einem Dichtungssystem auszustatten, diese Endscheibe kann sowohl eine axial gerichtete als auch eine radial gerichtete Dichtungsstruktur aufweisen. Die Endscheibe ist mit einem konzentrischen Kragen versehen, welcher eine Radialdichtung trägt. Grundsätzlich ist es möglich, die aus thermoplastischen Polyurethan bestehenden Elemente mit funktionellen Strukturen auszustatten. So kann beispielsweise auch eine Endscheibe mit Stützkörpern oder mit Verbindungselementen versehen sein.

Bei einem Verfahren zum Herstellen des Luftfilters, wird zunächst aus einem Filtermedium ein hohlzylindrisches zick-zack-förmig geformtes Element hergestellt. An den axialgerichteten Stirnseiten des Filtereinsatzes werden beispielsweise über Hochtemperaturheizelementschweißen die Endscheiben aufgeschmolzen und mit dem Filtermedium verbunden.
Anstelle von Hochtemperaturheizelementschweißen kann auch das Spiegelschweißen zur Anwendung gelangen.

Die Erfindung wird nachfolgend anhand eines Ausführungsbeispiels näher erläutert.

Es zeigt
- Figur 1: ein Filter in Schnittdarstellung
- Figur 2: einen Filtereinsatz in einer Detaildarstellung

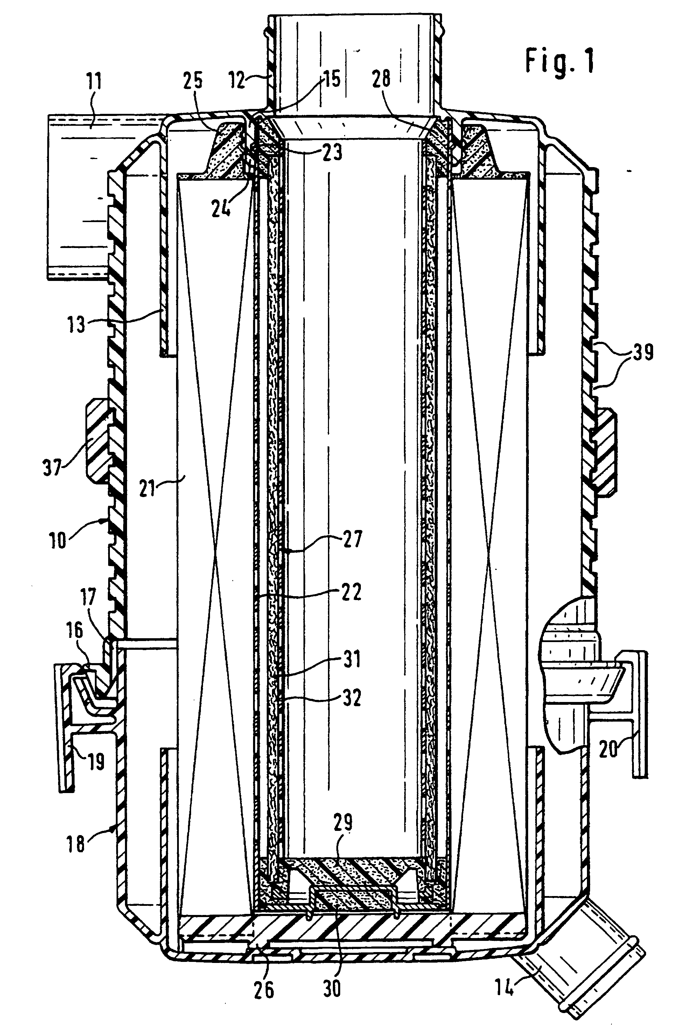

Das in Figur 1 gezeigte Filter ist in zwei Halbschnitten dargestellt. Der linke Halbschnitt zeigt das Filter mit noch leicht geöffnetem Deckel während der rechte Halbschnitt das Filter mit geschlossenem Deckel zeigt. Das Filter besteht aus einem zylindrischen Gehäuse 10 mit einem Rohlufteinlaß 11 und einem Reinluftauslaß 12. Im Bereich des Rohlufteinlasses ist eine Ableitwandung 13 (Tauchrohr) vorgesehen. In Verbindung mit dem tangential in das Gehäuse 10 einführenden Rohlufteinlaß bildet sich eine Drallströmung der Rohluft. Diese bewirkt ein Abschneiden grober Staubpartikel, wobei diese groben Staubpartikel an der Innenwandung des Filters nach unten gelangen und über eine Staubaustragöffnung 14, welche mit einem bekannten Staubaustragventil verschlossen ist, ins Freie geführt werden.

Eine zweckmäßige Ausgestaltung eines Filters ist darin zu sehen, daß das Mittelrohr gehäusefest angeordnet ist. Da dieses Mittelrohr nicht dem Verschleiß bzw. Verbrauch unterliegt, ist ein Austausch nicht erforderlich. In zweckmäßiger Weise ist dieses Mittelrohr welches insbesondere aus Kunststoff besteht, kraftschlüssig mit dem Ansatzrohr des Gehäuses verbunden.

Gemäß einer Ausgestaltung der Verbindung Mittelrohr - Ansatzrohr weist das Mittelrohr Dichtlippen auf, die im Verbindungsbereich angeordnet sind und eine zuverlässige Abdichtung gewährleisten.

Das Gehäuse 10 ist ferner mit einem Ansatzrohr 15, sowie mit einem umlaufenden Rastvorsprung 16 und einer zylinderförmigen Aufnahme 17 für einen Deckel 18, versehen. Der Deckel 18 ist topfförmig ausgebildet und weist wenigstens zwei Rastelemente 19, 20 auf. Diese Rastelemente sind schwenkbar mit dem Deckel über sogenannte Biegeschamiere verbunden und werden mit dem Deckel gemeinsam in einen Arbeitsgang aus Kunststoff hergestellt. Sie greifen über den Rastvorsprung 19 des Gehäuses 10. Im linken Teilschnitt der Figur 1 ist das Rastelement 19 in der Offenstellung gezeigt. Im rechten Teilschnitt bzw. in der ausgeschnittenen Ansicht ist das Rastelement 20 in geschlossener Stellung dargestellt.

An dem Ansatzrohr 15 des Gehäuse 10 ist ein Metall- oder Kunststoff-Mittelrohr 22 befestigt. Zur formschlüssigen Befestigung dieses Mittelrohrs ist dieses mit einem Wulst 23 versehen, welche in eine Nut 24 des Ansatzrohres 15 einrastet. Ein unbeabsichtigtes Entfernen des Mittelrohres ist damit nicht mehr möglich.

Über das Mittelrohr 22 ist ein Filtereinsatz 21 geschoben. Dieser Filtereinsatz trägt an seiner oberen Stirnfläche eine Radialdichtung, welche mit der Endscheibe 34 des Filtereinsatzes eine Einheit bildet. Diese Radialdichtung besteht aus einem umlaufenden und außerhalb der Filterebene liegenden Wulst 25. Der Wulst 25 umfaßt abdichtend das Ansatzrohr 15. Bei dieser Dichtungsart spielt eine axiale Lageänderung des Filtereinsatzes eine unerhebliche Rolle. Außerdem ist diese Art der Abdichtung auch bei Erschütterungen und Schwingungen äußerst zuverlässig.

Der Filtereinsatz 21 stüzt sich an seinem rückwärtigen Ende über Noppen 26 an dem Deckel 18 ab. Diese Noppen, die auch als Deformationsrippen ausgestaltet sein können, dienen zur axialen Fixierung des Filtereinsatzes und zur Schwingungsdämpfung der an dem rückwärtigen Bereich lediglich auf dem Mittelrohr 22 angeordneten Patrone. Innerhalb des Mittelrohrs 22 ist ein Sekundärelement 27 angeordnet. Dieses ist an seinem vorderen Ende mit einer PUR-Schaum-Stirnflächenabdichtung 28 versehen. Diese Stirnflächenabdichtung ist kraftschlüssig mit dem Ansatzrohr 15 verbunden. Das rückwärtige Ende des Sekundärelements 27 ist mit einer PUR-Schaum-Stirnseitenabdichtung 29 versehen. In diese Endscheibe 29 ist ein Kunststoffgriff integriert der dazu dient, das Sekundärelement manuell zu entfernen. Das Sekundärelement besteht zweckmäßigerweise aus einem Vlies 31, welches auf ein Stützrohr 32 geschoben ist. Die axiale Kraft zur Abdichtung des Sekundärelements an dem Reinluftausgang wird über den Deckel 18 und die Noppen 26 des Filtereinsatzes 21 auf die Stirnseitenabdichtung 29 aufgebracht.

Da das Sekundärelement 27 vollständig von dem Mittelrohr 22 umschlossen ist, besteht nicht die Gefahr, daß beim Austausch des Filtereinsatzes das Sekundärelement versehentlich herausgenommen wird oder herausfällt.

Beim Zusammenbau des gesamten Filters wird zunächst das Sekundärelement eingesteckt, anschließend der Filtereinsatz 21 darübergeschoben und der Deckel 18 aufgesetzt. Durch die Abstützung des Sekundärelements an dem Filtereinsatz 21 am rückwärtigen Ende, und gleichzeitig die Abstützung des Filtereinsatzes 21 an dem Deckel 18 werden durch das Aufschieben des Deckels beide Elemente in ihre lagerichtige Position gebracht. Dies bedeutet, daß eine Falschmontage der beiden Elemente nicht möglich ist. Die Endlage dieser Elemente wird durch Verschließen des Deckels 18 an der Aufnahme 17 erreicht.

Das metallfreie Sekundärelement ist problemlos zu entsorgen. Vlies, PUR-Schaum-Endscheiben, Kunststoff Mittelrohr und -Griff können beispielsweise thermisch entsorgt werden.

Weil der Filtereinsatz 21 an beiden Stirnseiten eine Stimseitenabdichtung aufweist, ist es ohne weiteres möglich, diesen Filtereinsatz auszuklopfen und von der Schmutzschicht zu befreien. Die elastischen Endscheiben werden dabei nicht beschädigt, wie dies beispielsweise bei Blechendscheiben der Fall wäre.

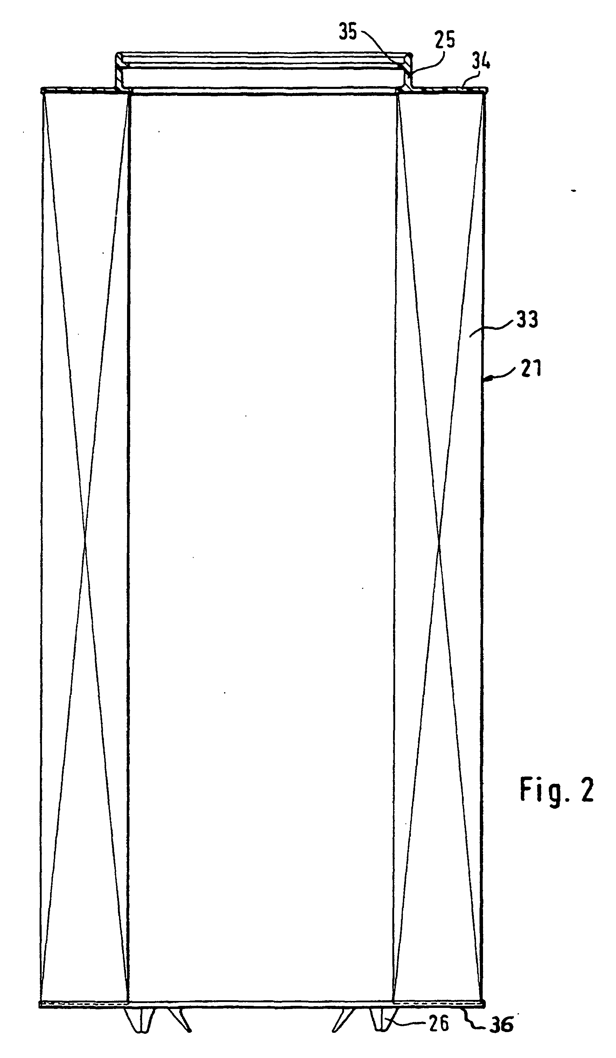

Figur 2 zeigt das Filterelement in einer Detaildarstellung. Das Filterelement 21 besteht aus einem zick-zack-förmig gefalteten Filtermedium 33, dieses kann am inneren oder äußeren Umfang mit einem Stützkörper versehen sein. Es besteht auch die Möglichkeit, das Filterelement 21 selbsttragend auszubilden, dies ist bei dem dargestellten Element der Fall. An der dem Reintuftauslaß zugewandten Stirnseite ist eine aus thermoplastischen Polyurethan bestehende Endscheibe 34 angeordnet. Diese Endscheibe trägt einen außerhalb der Filterebene liegenden Wulst 25. Dieser ist wiederum mit einem Dichtringelement 35 versehen, welches aus dem Material der Endscheibe besteht. Aufgrund der Elastizität des Materials wird eine zuverlässige Abdichtung zwischen Rohluft- und Reinluftseite im eingebauten Zustand erzielt. Selbstverständlich besteht auch die Möglichkeit, mehrere Ringdichtungselemente an dem Wulst 25 anzuordnen. Auf der dem Reinluftauslaß gegenüberliegenden Seite ist der Filtereinsatz 21 mit einer geschlossenen Endscheibe 36 versehen. Auch diese besteht aus einem thermoplastischen Elastomer, insbesondere aus einem thermoplastischen Polyurethan, und trägt mehrere Noppen oder Abstützelemente 26.

Zum Zusammenfügen des Filtereinsatzes 21 werden die Endscheiben 34, 36 auf der dem Filtermedium 33 zugewandten Seite beispielsweise mittels Heizelementschweißen erwärmt und nach ausreichender Erwärmung auf das Filtermedium aufgepreßt. Aufgrund der örtlich genau definierten Erwärmung kann die Eindringtiefe des Filtermediums in die jeweilige Endscheibe sehr genau bestimmt werden, damit besteht auch die Möglichkeit eventuell vorhandene Längentoleranzen des Filtermediums auszugleichen.

Aufgrund der bereits oben beschriebenen Struktur von thermoplastischen Elastomer, insbesondere thermoplastischem Polyurethan, ist bei den Endscheiben der Materialaufwand äußerst gering, damit werden erhebliche Kosten gespart, außerdem fallen geringere Kosten bei der Entsorgung des Filtereinsatzes 21 an.

## Patentansprüche

1. Luftfilter, insbesondere für die Reinigung von Verbrennungsluft für Brennkraftmaschinen, bestehend aus einem im wesentlichen metallfreien Filtereinsatz (21), welcher aus einem zick-zack-förmig gefalteten Filtermedium (33) hergestellt ist und einen Hohlzylinder bildet, wobei an den Stirnseiten des Filtermediums Endscheiben (34, 36) angeordnet sind und wobei an der einem Reinluftauslass zugewandten Stirnseite die Endscheibe (34) einen außerhalb der Filterebene liegenden Wulst (25) aufweist, dieser mit wenigsten einem Dichtringetement (35) versehen ist, welches aus dem Material der Endscheibe besteht und aufgrund der Elastizität des Materials eine zuverlässige Abdichtung zwischen Rohluft und Reinluftseite im eingebauten Zustand erzielt wird und wobei die gegenüberliegende Endscheibe (36) axial gerichtete Stützkörper (26) aufweist, welche aus dem Material der Endscheibe bestehen und aufgrund der Elastizität des Materials eine zuverlässige axiale Fixierung bewirken, **dadurch gekennzeichnet, daß** wenigstens die dem Reinluftauslass zugewandten Endscheibe (34) aus einem thermoplastischen Polyurethan-Elastomer besteht.

2. Luftfilter nach Anspruch 1, **dadurch gekennzeichnet, daß** an der Innenwandung oder der Außenwandung des Filtermediums (33) ein Stützkörper vorgesehen ist.

3. Luftfilter nach Anspruch 1 oder 2, **dadurch gekennzeichnet, daß** der Wulst (25) einen konzentrischen Kragen bildet, welcher eine Radialdichtung (35) trägt.

4. Verfahren zum Herstellen eines Luftfilters nach einem der vorherigen Ansprüche **dadurch gekennzeichnet, daß** wenigstens die Endscheibe (34) aus thermoplastischem Polyurethan mit dem Filtermedium (33) über ein HochtemperaturHeizelementschweißen verbunden wird und die Endscheibe (34) und/oder das Filtermedium (33) aufgeschmolzen wird.

5. Verfahren nach Anspruch 4, **dadurch gekennzeichnet, daß** die Verbindung von Endscheibe (34, 36) und Filtermedium (33) mittels Spiegelschweißen erfolgt.

## Claims

1. Air filter, in particular for cleaning the combustion air for internal combustion engines, consisting of an essentially metal-free filter insert (21) which is made of a concertina-folded filter medium (33) and forms a hollow cylinder, end plates (34, 36) being located at the front and end face of the filter medium, the end plate (34) at the face facing a clean-air outlet having a bulge (25) that lies outside the filter level, this bulge being equipped with at least one sealing ring element (35) that is made of the material of the end plate, a reliable sealing between the raw air and the clean air side being achieved when installed thanks to the elasticity of the material, the opposite end plate (36) having axially aligned supporting elements (26) that are made of the material of the end plate and cause a reliable axial fixation thanks to the elasticity of the material, **characterised in that** at least the end plate (34) facing the clean-air outlet is made of a thermo-plastic polyurethane elastomer.

2. Air filter according to claim 1, **characterised in that** a supporting element is provided for at the inner wall or the outer wall of the filter medium (33).

3. Air filter according to claim 1 or 2, **characterised in that** the bulge (25) forms a concentric collar which bears a radial seal (35).

4. Procedure for manufacturing an air filter according to one of the above claims,
**characterised in that** at least the end plate (34) made of thermo-plastic polyurethane is joined to the fitter medium (33) by means of high-temperature heated tool welding and the end plate (34) and/or the filter medium (33) is melted on.

5. Procedure according to claim 4, **characterised in that** the end plates (34, 36) and the filter medium (33) are joined together by means of butt-welding.

## Revendications

1. Filtre à air, en particulier pour nettoyer l'air de combustion pour des moteurs à combustion interne, composé essentiellement d'un insert filtrant (21) exempt de métal, qui est fabriqué d'un milieu filtrant (33) formé en zigzag et qui forme un cylindre creux, des plaques terminales (34, 36) étant placées contre les côtés frontaux, la plaque terminale (34) du côté frontal dirigé vers une sortie d'air épuré présentant un bourrelet (25) situé un dehors du plan de filtrage, ledit bourrelet étant équipe au moins d'un élément d'une bague d'étanchéité (35) qui est fait du même matériau que la plaque terminale, une étanchéité fiable étant assurée lors de son installation entre l'air non-épuré et l'air épuré grâce à l'élasticité du matériau, la plaque terminale opposée (36) étant équipée d'éléments de support (26) arrangés de manière axiale qui sont faits du même matériau que la plaque terminale et assurent une fixation axiale fiable grâce à l'élasticité du matériau, **caractérisé en ce qu'**au moins une plague terminale (34) dirigée vers la sortie d'air épuré est faite d'un élastomère de polyuréthane thermoplastique.

2. Filtre à air selon la revendication 1, **caractérisé en ce qu'**un élément de support est prévu soit sur la paroi interne soit sur la paroi externe du milieu de filtrage (33).

3. Filtre à air selon la revendication 1 ou 2, **caractérisé en ce que** le bourrelet (25) forme un collet concentrique comportant un joint radial (35).

4. Procédé de production d'un filtre à air selon l'une des revendications ci-dessus, **caractérisé en ce qu'**au moins la plaque terminale (34) faite de polyuréthane thermoplastique est jointe au milieu de filtrage (33) au moyen de soudage par éléments chauffants à hautes températures et que la plaque terminale (34) et/ou le milieu de filtrage (33) y est fondu.

5. Procédé selon la revendication 4, **caractérisé en ce que** les plaques terminales (34, 36) et le milieu de filtrage sont joint par soudage en bout à l'aide de réflecteurs.
